# EUROPEAN PATENT SPECIFICATION

(11) **EP 2 029 935 B1**
(45) Date of publication and mention of the grant of the patent: **23.12.2009**
(21) Application number: 07726005.7
(22) Date of filing: 14.06.2007
(51) Int. Cl.: F21V 8/00, G02B 6/00

(54) **DEVICE FOR SIGNS**
VORRICHTUNG FÜR SCHILDER
DISPOSITIF POUR ENSEIGNES

(30) Priority: 22.06.2006 IT MI20061203
(43) Date of publication of application: 04.03.2009
(73) Proprietor: D-due Divisione Laser S.r.l., 37020 Cerro Veronese (IT)
(72) Inventor: DANIELI, Daniele, I-37020 Cerro Veronese (IT)
(74) Representative: Sama, Daniele
(86) International application number: PCT/EP2007/005241
(87) International publication number: WO 2007/147517

(56) References cited:
- US-A- 5 584 556
- US-A- 6 123 431

## Description

The present invention relates to plates, flat or curved, lighted by light sources placed on one or more edge lits, showing uniformly lit surfaces.

More specifically the present invention relates to plates made of thermoplastic polymers, preferably based on acrylic polymers, whose surfaces show an uniform lighting when lit by light sources placed on one or more edge lits.

The plates according to the present invention are usable for preparing LCD (liquid cristal display device) screens, preferably for luminous signs or displays, even of large sizes.

More specifically the invention refers to plates formed of methylmethacrylate copolymers with (meth)acrylic esters or (meth)acrylic acids, in particular methylmethacrylate/alkylacrylate copolymers, preferably ethyl acrylate, by which luminous signs can be made, which show as said, uniformly lit surfaces.

Devices formed of plates sheets having light sources on one or more edges are known in the prior art, and are used to uniformly lit luminous signs. These devices, also called "backlight units" or "edge light units", are generally formed of a light guiding plate capable to diffuse the light on the device surfaces. At this purpose the plate can contain suitable additives, or have one or both surfaces satinized, or dot-print treated.

USP 5,584,556 describes a device to diffuse light comprising a light guiding plate, a light diffusing plate placed on the upper surface of the light guiding plate (looking at the device from the top), a reflecting surface placed on or adjacent to the lower surface of the light guiding plate, a light source placed on one or both the opposite sides of the light guiding plate (see the Figures of said patent). The lower surface of the light guiding plate has a series of small protrusions, or small cavities, or a series of grooves having rough surfaces. The figures illustrate that the protrusions, or the cavities, or the grooves are arranged according to lines which are parallel to the light guiding plate edge which is lit by the light source. This arrangement can also be in the form of dots aligned according to parallel lines, wherein the dot density increases as the distance from the light source increases. Furthermore from the figures it is noticed that when there are grooves on the light guiding plate, they generally become deeper, i.e. their depth increases, as the distance from the light source increases.

Patent application WO 02/101.448 describes a light guiding plate comprising a series of V-shaped grooves. They are therein defined horizontal and are perpendicular to the light source placed on one or both the opposite sides of the plate. The grooves are spaced and are placed along the light diffusion direction. Both the groove width and depth are gradually increased as the distance from the light source increases (see in particular Figures 11 and 12 of the patent application). Besides the horizontal grooves a second series of grooves, always V-shaped, perpendicular with respect to the previous ones, can be carried out, thus forming a reticule. The distance among the perpendicular grooves is reduced as their distance from the light source increases. According to this patent application a good plate light uniformity is obtained by using a series of grooves forming a reticule on the plate surface, as described above.

From an industial point of view, it is requested that the devices used for luminous signs be easier to be manufactured and have a lower cost. A simplified industrial manufacturing process leads therefore to remarkable advantages in comparison with the known devices for luminous signs today on the market.

The need was felt to have available a "backlight unit" and/or "edge lit unit" device having the following combination of properties:
- uniform lighting on the surfaces, even in case of broad ones, as those of the luminous signs, for example surfaces having a size of 500x700 mm, or 1,000x700 mm, or
   1,000x1,800 mm, etc.;
- simplified manufacturing process from an industrial point of view compared with those of the prior art.

The Applicant has surprisingly and unexpectedly found a device solving the above mentioned technical problem.

An object of the present invention is a "backlight unit" and/or "edge lit unit" device comprising the following parts:
- a light guiding plate in thermoplastic material;
- a light source placed on at least one edge of the light guiding plate;
- a reflecting surface placed along one surface of the light guiding plate, here called lower surface, a series of grooves being present on said lower surface and arranged so as to be parallel to the light guiding plate edge on which there is the light source;
- the grooves having:
   - a hollow shape;
   - the total groove surface, measured on the groove projections on the plate surface, comprised between 10% and 60%, preferably 15%-40%, with respect to the plate surface;
   - the groove width is comprised between 0.2 and 5 mm, preferably between 0.5 mm and 2 mm.

In the device of the present invention instead of a light source, two light sources are preferably used placed on the parallel edges of the light guiding plate. Light sources placed on all the sides of the light guiding plate can also be used.

The light guiding plate can have very reduced sizes, such as the A4 format, up to very large sizes, for example a width of 2 m and length as desired, i.e. non critical, also up to 10 m, respectively. Preferably the light guiding plate has sizes 500 (width) x 700 mm (length), or 700x1,000 mm, or 1,000x1,800 mm, respectively.

The grooves have generally a rough surface. Generally the grooves have the same shape.

Generally the groove depth can range from 50 µm to 2 mm.

Preferably the groove density on the plate surface increases by increasing the distance from the light source. On the plate surface bearing the grooves (lower surface) the groove width can be also variable.

By groove density it is meant the number of grooves/unit surface.

The reflecting surface is generally made of any material that reflects light, for example a white surface can be used. For example thermoplastic polymers, for example foam PVC, as Forex^{®}; metal sheets, in particular an aluminum sheet, or aluminium composites, as Dibond^{®}, can be used as reflecting surface.

According to another embodiment of the present invention in place of the reflecting surface a transparent thermoplastic material sheet can be used. In this way advertising signs having both surfaces lit are obtained.

Optionally on the lower surface of the light guiding plate also grooves perpendicular to the parallel grooves as defined above can also be present. The perpendicular grooves can also be regularly spaced.

The polymeric thermoplastic material of which the light guiding plate is made, can for example be a (meth)acrylic (co)polymer, polyethylenterephthalate, polyethylenterephthalate modified with a glycol, such as for example diethylenglycol, butandiol, hexandiol and 1,4-cyclohexan dimethanol. Mixtures of various thermoplastic materials can also be used. In particular the (meth)acrylic thermoplastic (co)polymer can be formed of an alkyl (meth)acrylate homopolymer or of a copolymer derived from an alkyl (meth)acrylate with at least one monomer having one or more ethylene type unsaturations. As alkyl (meth)acrylate, those wherein the alkyl has from 1 to 8 carbon atoms, preferably from 1 to 4 carbon atoms, for example methyl-, ethyl-, propyl-, isopropyl- and butyl (meth) acrylate, can be mentioned. A particularly preferred monomer is methyl methacrylate. Preferably the termoplastic polymer is formed of methyl methacrylate homopolymers or copolymers of methylmethacrylate with (meth)acrylic esters or (meth)acrylic acids, in particular methylmethacrylate/alkyl-acrylate copolymers, preferably ethyl acrylate. The (meth)-acrylic thermoplastic (co)polymer comprises from 70% to 100% by weight of alkyl methacrylate and from 0% tol 30% by weight, preferably from 3% to 10% by weight, of one or more comonomers containing one or more ethylene unsaturations. The monomers containing one or more ethylene unsaturations are for example selected from C₁-C₈ alkyl-acrylates, styrene, styrene substituted, acrylonitrile, methacrylonitrile, C₁-C₈ alkyl methacrylates different from the alkyl methacrylate used as main comonomer, hydroxyalkyl acrylates and methacrylates, alkoxyalkyl or aryloxyalkyl acrylates and methacrylates wherein the alkyl group has from 1 to 4 carbon atoms, acrylamide, methacrylamide, acrylic acid, methacrylic acid, maleimides and dimethacrylates of C₁-C₄ alkylen glycol. The acrylic copolymers can be obtained by the known processes, for example by suspension or mass polymerization. The polymerization takes place in the presence of a chain transfer agent, as for example di-unsaturated monocyclic terpenes and monounsaturated bicyclic terpenes, as for example terpinolene; mercaptanes, as tert-dodecyl mercaptane.

The light guiding plate according to the present invention can be obtained by extrusion, casting, or compression molding.

The light guiding plate edges are preferably polished according to known techniques.

On one or more edges of the light guiding plate of the present invention, on which the light source is not positioned, a reflecting film can be placed, for example a polyester film, in particular a Scotch 3M^{®} polyester tape 850 film; a metallic film, for example an aluminium film, etc.

Optionally the thermoplastic polymer of the light guiding plate can contain light diffusing fillers. The fillers can be polymeric and/or inorganic. The polymeric fillers, for example PTFE, have average particle sizes between 0.1 and 200 micron, preferably from 0.1 to 50 micron, more preferably from 1 to 15 micron. The amount of organic fillers is between 5 and 1,000 ppm, preferably from 100 to 200 ppm. The inorganic fillers, for example barium sulphate, have average particle sizes between 0.1 and 50 micron, preferably between 0.5 and 10 micron. Their amount by weight is in the range 0.01% - 2%, preferably 0.1% -0.8%, still more preferably 0.1% - 0.6%.

The surface of the light guiding plate opposite to that bearing grooves can contain grooves or it can be matted or smooth.

The grooves on the surface of the light guiding plate can be obtained with the equipments commonly available in the art, for example by milling or laser incisions.

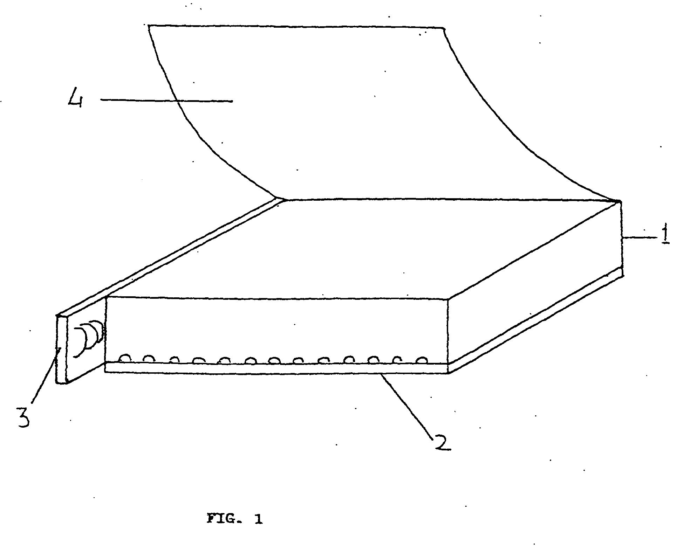

In Fig. 1 a preferred embodiment of the device according to the present invention is represented. (1) indicates the light guiding plate bearing on its lower surface the grooves (incisions); (2) is the reflecting film; (3) is the light source, shown in the figure by a series of LED, (4) is the sheet which bears the advertising message. The LEDs (3) are generally placed in the direction of the plate length, as shown in Fig. 1.

It is a further object of the present invention luminous signs and LCD screens comprising the "backlight unit" or "edge lit unit" device according to the present invention.

It has been surprisingly and unexpectedly found by the Applicant that with the device of the present invention it is possible to obtain an uniform lighting of a remarkable intensity on the device surface, without the need of diffusing plates that are incorporated in the devices of the prior art. Furthermore this result is obtained without using grooves having particular shapes or grooves perpendicular each other to form a reticule, as in the prior art.

The device of the present invention represents therefore a remarkable simplification of the known embodiments on the market and of the prior art.

The following Examples illustrate the invention and do not limit the application scope thereof.

### EXAMPLES

### Lighting system

The light system used is formed of two LED strips, placed on two opposite edges of the light guiding plate, parallel to the grooves, said LEDs having an overall power of 56 W.

### Determination of the light intensity diffused on the free surface of the light guiding plate

A luxmeter RS 180-7133 model is used.

The luxmeter is moved along a line which is perpendicular to the two lit edges. The light intensity at fixed positions on said line is taken.

### EXAMPLE 1

### Measurement of the luminous intensity on the free surface of a "backlight unit" device according to the present invention

The used device consists of a light guiding plate having 500 (width) x 700 (length) mm and 10 mm thickness sizes, having grooves on the lower surface of the plate. Said grooves have an average width of 1 mm, a depth of 200 µm and are made by using a conventional laser device. The grooves are spaced in such a way that the total area, measured from the projections of the grooves on the plate surface is 28%, with respect to the total surface of the side of the plate. The grooves show a rough surface.

As reflecting surface a white Forex^{®} (foam PVC) plate is used.

By using the above described method the intensities of light reported in Table 1 have been measured.

### EXAMPLE 1A

### Preparation of a sign by using the "backlight unit" device of the Example 1

On the free surface of the "backlight unit" device prepared in the Example 1 a Duratrans^{®} sheet bearing an advertising message in the form of a serigraph is positioned. The applied sheet has the same surface as the device.

The so prepared panel appears uniformly lit and the intensity of light is well evident even in daylight conditions.

### EXAMPLE 2 Comparative

### Positioning of a diffusing plate on the free surface of a "backlight unit" device according to the present invention and determination of the intensity of light

On the free surface of the light guiding plate of a device equal to that used in the Example 1 a diffusing plate in acrylic material is positioned. The plate has a transmittance equal to 88-90% and a haze equal to 98%, measured with Hazemeter (according to ASTM D 1003 standard for both the determinations).

The light intensity values are reported in Table 2.

The data reported in the Table show that the light intensity values determined at the various points of the device surface, even if rather uniform, are lower than those of the Example 1.

### EXAMPLE 2A Comparative

### Preparation of a sign by using the "backlight unit" device of the Example 2 Comparative

On the free surface of the "backlight unit" device prepared in the Example 1 a Duratrans^{®} sheet bearing an advertising message in the form of a serigraph is positioned as described in the Example 1A.

The so prepared advertising sign is visually compared with that of the Example 1A. The light intensity is lower than that of the panel of the Example 1A.

### EXAMPLE 3 Comparative

Light intensity determination on the free surface of a "backlight unit" device wherein the total area of the projections of the grooves on the plate surface is equal to 70% with respect to the surface area of the side of the plate.

The device is formed of a light guiding plate having 500 (width) x 700 (length) mm and 10 mm thichness sizes. On the lower surface of the plate grooves are made by using a laser equipment. The thus formed grooves have an average width of 1 mm, depth of 200 µm. The grooves are spaced each from the other so that the total area, measured from the projections of the grooves on the plate surface, with respect to the total surface of the plate side, is equal to 70%. The grooves show a rough surface.

As reflecting surface a white Forex^{®} (foam PVC) plate is applied.

By using the above described method the light intensities reported in Table 3 have been measured.

Table 3 shows that, when the global area of the projections of the hollow incisions on the plate surface exceeds 60%, the light intensity distribution on the plate surface is no longer uniform. In fact it was found that those parts of the plate surface that were adjacent to the light sources were more intensely lit.

**TABLE 1**

| Distance from the light guiding plate edge (cm) | 5 | 15 | 20 | 25 | 30 | 35 | 45 |
|---|---|---|---|---|---|---|---|
| Lux | 1,600 | 1,610 | 1,620 | 1,600 | 1,620 | 1,620 | 1,610 |

**TABLE 2**

| Distance from the light guiding plate edge (cm) | 5 | 15 | 20 | 25 | 30 | 35 | 45 |
|---|---|---|---|---|---|---|---|
| Lux | 1,300 | 1,350 | 1,320 | 1,300 | 1,330 | 1,360 | 1,310 |

**TABLE 3**

| Distance from the light guiding plate edge (cm) | 5 | 15 | 20 | 25 | 30 | 35 | 45 |
|---|---|---|---|---|---|---|---|
| Lux | 1,800 | 1,400 | 900 | 600 | 1,100 | 1,530 | 1,850 |

## Claims

1. A "backlight unit" device comprising the following parts:
- a light guiding plate in thermoplastic material;
- a source of light placed on at least one edge of the light guiding plate;
- a reflecting surface placed along one surface of the light guiding plate, herein called lower, a series of grooves being present on said inferior surface, and arranged so as to be parallel to the light guiding plate edge on which there is placed the light source;
- the grooves having:
- an hollow shape;
- the total groove surface, measured on the groove projections on the plate surface, is comprised between 10% and 60%, preferably 15%-40%, with respect to the plate surface;
- the groove width is comprised between 0.2 and 5 mm, preferably between 0.5 mm and 2 mm.

2. A device according to claim 1, wherein there are two light sources placed on the parallel edges of the light guiding plate.

3. A device according to claims 1-2, wherein the sizes of the light guiding plate vary from the A4 format, up to a width of 2 m, the length being as desired.

4. A device according to claim 3, wherein the light guiding plate has 500 (width) x 700 mm (length), or 700x1,000 mm, or 1,000x1,800 mm sizes.

5. A device according to claims 1-4, wherein the grooves have a rough surface.

6. A device according to claims 1-5, wherein the grooves have a depth ranging from 50 µm to 2 mm.

7. A device according to claims 1-6, wherein the groove density increases by increasing the distance from the light source.

8. A device according to claims 1-7, wherein the groove width is variable.

9. A device according to claims 1-8, wherein the reflecting surface is formed of materials selected from thermoplastic polymers, metal sheets, preferably aluminum, or aluminum composites.

10. A device according to claims 1-9, wherein in place of the reflecting surface a plate in transparent thermoplastic material is used.

11. A device according to claims 1-.10, wherein on the lower surface of the light guiding plate there- are grooves perpendicular to the parallel grooves.

12. A device according to claims 1-11, wherein the thermoplastic material of the light guiding plate is a (meth)-acrylic (co)polymer, polyuethylenterephthalate, polyethylenterephthalate modified with a glycol, or their mixtures.

13. A device according to claim 12, wherein the (meth)acrylic (co)polymer is an alkyl (meth)acrylate homopolymer or a copolymer derived from an alkyl (meth)acrylate with at least one monomer having one or more ethylene type unsaturations.

14. A device according to claims 12-13, wherein the termoplastic polymer is selected from methyl methacrylate homopolymers, copolymers of methylmethacrylate with (meth)-acrylic esters or (meth)acrylic acids.

15. A device according to claims 12-14, wherein the (meth)-acrylic (co)polymer comprises from 70% to 100% by weight of alkyl methacrylate and from 0% tol 30% by weight of one or more comonomers selected from C₁-C₈ alkyl-acrylates, styrene, styrene substituted, acryilonitrile, methacrylonitrile, C₁-C₈ alkyl methacrylates different from the alkyl methacrylate used as main comonomer, hydroxyalkyl acrylates and methacrylates, alkoxyalkyl or aryloxyalkyl acrylates and methacrylates wherein the alkyl group has from 1 to 4 carbon atoms, acrylamide, methacrylamide, acrylic acid, methacrylic acid, maleimides and dimethacrylates of C₁-C₄ alkylen glycol.

16. A device according to claims 1-15, wherein the light guiding plate edges are polished.

17. A device according to claims 1-16, wherein on the edges of the light guiding plate where the source of light is not positioned, a reflecting film is placed.

18. A device according to claims 1-17, wherein the light guiding plate contains fillers diffusing light, of polymeric or inorganic type.

19. A device according to claim 18, wherein the polymeric fillers have average sizes between 0.1 and 200 micron, preferably from 0.1 to 50 micron, more preferably from 1 to 15 micron.

20. A device according to claims 18-19, wherein the amount of organic fillers is between 5 and 1,000 ppm, preferably from 100 to 200 ppm.

21. A device according to claim 18, wherein the inorganic fillers have average sizes between 0.1 and 50 micron, preferably between 0.5 and 10 micron.

22. A device according to claim 21, wherein the amount by weight of the inorganic fillers is in the range 0.01% - 2%, preferably 0.1% - 0.8%, still more preferably 0.1% - 0.6%.

23. A device according to claims 1-22, wherein the surface of the light guiding plate opposite to that bearing grooves can contain grooves or it can be matted or smooth.

24. Luminous signs and LCD screens comprising the devices according to claims 1-23.

## Patentansprüche

1. "Hintergrund-Beleuchtungs-Einheit"-Vorrichtung, umfassend die nachstehenden Teile:
- eine Licht leitende Platte in thermoplastischem Material;
- eine Licht-Quelle, die auf mindestens einer Kante von der Licht leitenden Platte angeordnet ist;
- eine reflektierende Oberfläche, die entlang einer Oberfläche von der Licht leitenden Platte angeordnet ist, hierin untere genannt, wobei eine Reihe von Rillen auf der inneren Oberfläche vorliegt und so angeordnet sind, dass sie parallel zu der Kante der Licht leitenden Platte, auf der die Licht-Quelle plaziert ist, sind;
- wobei die Rillen aufweisen:
- eine Hohl-Form;
- die gesamte Rillen-Oberfläche, gemessen auf den Rillen-Herausragungen auf der Platten-Oberfläche, zwischen 10 % und 60 %, vorzugsweise 15 % - 40 %, bezogen auf die Platten-Oberfläche, umfasst;
- die Rillen-Breite zwischen 0,2 und 5 mm, vorzugsweise zwischen 0,5 mm und 2 mm, umfasst.

2. Vorrichtung nach Anspruch 1, wobei es zwei Licht-Quellen gibt, die auf den parallelen Kanten von der Licht leitenden Platte angeordnet sind.

3. Vorrichtung nach Ansprüchen 1-2, wobei die Größen von der Licht leitenden Platte von dem A4-Format bis zu einer Breite von 2 m, wobei die Länge wie gewünscht ist, variiert.

4. Vorrichtung nach Anspruch 3, wobei die Licht leitende Platte Größen von 500 (Breite) x 700 mm (Länge) oder 700 x x 1 000 mm oder 1 000 x 1 800 mm aufweist.

5. Vorrichtung nach Ansprüchen 1-4, wobei die Rillen eine raue Oberfläche aufweisen.

6. Vorrichtung nach Ansprüchen 1-5, wobei die Rillen eine Tiefe im Bereich von 50 µm bis 2 mm aufweisen.

7. Vorrichtung nach Ansprüchen 1-6, wobei die Rillen-Dichte sich durch Erhöhen des Abstandes von der Licht-Quelle erhöht.

8. Vorrichtung nach Ansprüchen 1-7, wobei die Rillen-Breite variabel ist.

9. Vorrichtung nach Ansprüchen 1-8, wobei die reflektierende Oberfläche aus Materialien, ausgewählt aus thermoplastischen Polymeren, Metall-Blechen, vorzugsweise Aluminium oder Aluminium-Verbundwerkstoffen, ausgewählt ist.

10. Vorrichtung nach Ansprüchen 1-9, wobei an Stelle der reflektierenden Oberfläche eine Platte in transparentem thermoplastischem Material verwendet wird.

11. Vorrichtung nach Ansprüchen 1-10, wobei es auf der unteren Oberfläche von der Licht leitenden Platte Rillen gibt, die rechtwinklig zu den parallelen Rillen sind.

12. Vorrichtung nach Ansprüchen 1-11, wobei das thermoplastische Material von der Licht leitenden Platte ein (Meth) acryl-(Co) polymer, Polyethylen-terephthalat, Polyethylen-terephthalat, modifiziert mit einem Glycol, oder deren Gemische ist.

13. Vorrichtung nach Anspruch 12, wobei das (Meth)acryl-(Co)polymer ein Alkyl-(meth)acrylat-Homopolymer oder ein Copolymer, abgeleitet von einem Alkyl-(meth)acrylat mit mindestens einem Monomer, das eine oder mehrere Ungesättigtheiten vom Ethylen-Typ aufweist, ist.

14. Vorrichtung nach Ansprüchen 12-13, wobei das thermoplastische Polymer aus Methyl-methacrylat-Homopolymeren, Copolymeren von Methyl-methacrylat mit (Meth)acrylsäureestern oder (Meth)acrylsäuren ausgewählt ist.

15. Vorrichtung nach Ansprüchen 12-14, wobei das (Meth)acryl-(Co)polymer von 10 % bis 100 Gew.-% Alkyl-methacrylat und von 0 % bis 30 Gew.-% von einem oder mehreren Co-monomeren, ausgewählt aus C₁-C₈-Alkyl-acrylaten, Styrol, substituiertem Styrol, Acrylnitril, Methacrylnitril, C₁-C₈-Alkyl-methacrylaten, die sich von dem Alkyl-methacrylat, das als Haupt-Comonomer verwendet wird, unterscheiden, Hydroxy-alkyl-acrylaten und -methacrylaten, Alkoxy-alkyl- oder Aryloxy-alkyl-acrylaten und -methacrylaten, worin die Alkyl-Gruppe 1 bis 4 Kohlenstoff-Atome aufweist, Acrylamid, Methacrylamid, Acrylsäure, Methacrylsäure, Maleimiden und Dimethacrylaten von C₁-C₄-Alkylen-glycol, umfasst.

16. Vorrichtung nach Ansprüchen 1-15, wobei die Kanten von der Licht leitenden Platte poliert sind.

17. Vorrichtung nach Ansprüchen 1-16, wobei auf den Kanten von der Licht leitenden Platte, wo die Licht-Quelle nicht positioniert ist, eine reflektierende Folie angeordnet ist.

18. Vorrichtung nach Ansprüchen 1-17, wobei die Licht leitende Platte Füllstoffe vom polymeren oder anorganischen Typ enthält, die Licht streuen.

19. Vorrichtung nach Anspruch 18, wobei die polymeren Füllstoffe mittlere Größen zwischen 0,1 und 200 Mikrometer, vorzugsweise von 0,1 bis 50 Mikrometer, bevorzugter von 1 bis 15 Mikrometer, aufweisen.

20. Vorrichtung nach Ansprüchen 18-19, wobei die Menge an organischen Füllstoffen zwischen 5 und 1 000 ppm, vorzugsweise von 100 bis 200 ppm, liegt.

21. Vorrichtung nach Anspruch 18, wobei die anorganischen Füllstoffe mittlere Größen zwischen 0,1 und 50 Mikrometer, vorzugsweise zwischen 0,5 und 10 Mikrometer, aufweisen.

22. Vorrichtung nach Anspruch 21, wobei die Gewichts-Menge von den anorganischen Füllstoffen in dem Bereich von 0,01 % - 2 %, vorzugsweise 0,1 % - 0,8 %, besonders bevorzugt 0,1 % - 0,6 %, liegt.

23. Vorrichtung nach Ansprüchen 1-22, wobei die Oberfläche von der Licht leitenden Platte, die jener gegenüber liegt, welche die Rillen trägt, Rillen enthalten kann oder sie kann mattiert oder glatt sein.

24. Leucht-Zeichen und LCD-Schirme, umfassend die Vorrichtungen nach Ansprüchen 1-23.

## Revendications

1. Dispositif « d'unité de rétroéclairage » comprenant les pièces suivantes
- une plaque de guidage de lumière en matériau thermoplastique ;
- une source de lumière placée sur au moins un bord de la plaque de guidage de lumière ;
- une surface réfléchissante placée le long d'une surface de la plaque de guidage de lumière, appelée ici surface inférieure, une série de rainures étant présente sur ladite surface inférieure, et agencée de façon à être parallèle au bord de plaque de guidage de lumière sur lequel est placée la source de lumière ;
- les rainures ayant :
- une forme creuse ;
- la surface de rainures totale, mesurée sur les projections de rainures sur la surface de plaque, est comprise entre 10 % et 60 %, de préférence 15 % et 40 %, par rapport à la surface de plaque ;
- la largeur de rainure est comprise entre 0,2 et 5 mm, de préférence entre 0,5 mm et 2 mm.

2. Dispositif selon la revendication 1, dans lequel il y a deux sources de lumière placées sur les bords parallèles de la plaque de guidage de lumière.

3. Dispositif selon les revendications 1-2, dans lequel les tailles de la plaque de guidage de lumière varient du format A4 jusqu'à une largeur de 2 m, la longueur étant telle que souhaitée.

4. Dispositif selon la revendication 3, dans lequel la plaque de guidage de lumière a des tailles de 500 (largeur) x 700 mm (longueur) ou de 700 x 1 000 mm, ou de 1 000 x 1 800 mm.

5. Dispositif selon les revendications 1-4, dans lequel les rainures ont une surface rugueuse.

6. Dispositif selon les revendications 1-5, dans lequel les rainures ont une profondeur située dans la plage allant de 50 µm à 2 mm.

7. Dispositif selon les revendications 1-6, dans lequel la densité de rainures augmente du fait de l'augmentation de la distance par rapport à la source de lumière.

8. Dispositif selon les revendications 1-7, dans lequel la largeur de rainure est variable.

9. Dispositif selon les revendications 1-8, dans lequel la surface réfléchissante est formée de matériaux choisis parmi les polymères thermoplastiques, les tôles métalliques, de préférence l'aluminium, ou les composites d'aluminium.

10. Dispositif selon les revendications 1-9, dans lequel, à la place de la surface réfléchissante, une plaque en matériau thermoplastique transparent est utilisé.

11. Dispositif selon les revendications 1-10, dans lequel, sur la surface inférieure de la plaque de guidage de lumière, il y a des rainures perpendiculaires aux rainures parallèles.

12. Dispositif selon les revendications 1-11, dans lequel le matériau thermoplastique de la plaque de guidage de lumière est un (co)polymère (méth)acrylique, le poly(téréphtalate d'éthylène), un poly(téréphtalate d'éthylène) modifié par un glycol, ou leurs mélanges.

13. Dispositif selon la revendication 12, dans lequel le (co)polymère (méth)acrylique est un homopolymère de (méth)acrylate d'alkyle ou un copolymère dérivant d'un (méth)acrylate d'alkyle avec au moins un monomère ayant au moins une ou plusieurs insaturations éthyléniques.

14. Dispositif selon les revendications 12-13, dans lequel le polymère thermoplastique est choisi parmi les homopolymères de méthacrylate de méthyle, les copolymères de méthacrylate de méthyle avec des esters (méth)acrylates ou des acides (méth)acryliques.

15. Dispositif selon les revendications 12-14, dans lequel le (co)polymère (méth)acrylique comprend de 70 % à 100 % en poids de méthacrylate d'alkyle et de 0 % à 30 % en poids d'un ou plusieurs comonomères choisis parmi les acrylates d'alkyle en C₁ à C₈, le styrène, les styrènes substitués, l'acrylonitrile, le méthacrylonitrite, les methacrylates d'alkyle en C₁ à C₈ différents du méthacrylate d'alkyle utilisé à titre de comonomère principal, les acrylates et méthacrylates d'hydroxyalkyle, les acrylates et méthacrylates d'alcoxyalkyle ou d'aryloxyalkyle dans lesquels le groupe alkyle a de 1 à 4 atomes de carbone, l'acrylamide, le méthacrylamide, l'acide acrylique, l'acide méthacrylique, les maléimides et les diméthacrylates d'alkylèneglycol en C₁ à C_{4.}

16. Dispositif selon les revendications 1-15, dans lequel les bords de plaque de guidage de lumière sont polis.

17. Dispositif selon les revendications 1-16, dans lequel, sur les bords de la plaque de guidage de lumière où la source de lumière n'est pas positionnée, est placé un film réfléchissant.

18. Dispositif selon les revendications 1-17, dans lequel la plaque de guidage de lumière contient des charges diffusant la lumière, de type polymère ou inorganique.

19. Dispositif selon la revendication 18, dans lequel les charges polymères ont des tailles moyennes comprises entre 0,1 et 200 micromètres, de préférence de 0,1 à 50 micromètres, mieux encore de 1 à 15 micromètres.

20. Dispositif selon les revendications 18-19, dans lequel la quantité de charges organiques est comprise entre 5 et 1 000 ppm, de préférence de 100 à 200 ppm.

21. Dispositif selon la revendication 18, dans lequel les charges inorganiques ont des tailles moyennes comprises entre 0,1 et 50 micromètres, de préférence entre 0,5 et 10 micromètres.

22. Dispositif selon la revendication 21, dans lequel la quantité en poids de charges inorganiques est située dans la plage allant de 0,0 1% à 2 %, de préférence de 0, 1 % à 0,8 %, mieux encore de 0, 1 % à 0,6 %.

23. Dispositif selon les revendications 1 à 22, dans lequel la surface de la plaque de guidage de lumière opposée à celle portant des rainures peut contenir des rainures, ou bien elle peut être matifiée ou lisse.

24. Signaux lumineux et écrans à cristaux liquides comprenant les dispositifs selon les revendications 1 à 23.
